(19) Europäisches Patentamt
European Patent Office
Office européen des brevets

(11) **EP 3 404 070 B1**

(12) **EUROPÄISCHE PATENTSCHRIFT**

(45) Veröffentlichungstag und Bekanntmachung des Hinweises auf die Patenterteilung:
**02.12.2020   Patentblatt 2020/49**

(51) Int Cl.:
*C09D 5/00* *(2006.01)*          *B05D 5/00* *(2006.01)*

(21) Anmeldenummer: **18171006.2**

(22) Anmeldetag: **07.05.2018**

(54) **VERBUNDGEBILDE MIT SELEKTIVER BESCHICHTUNG UND HERSTELLUNGSVERFAHREN**

COMPOSITE STRUCTURE WITH SELECTIVE COATING AND PRODUCTION METHOD

COMPOSITES À REVÊTEMENT SÉLECTIF ET PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2017   AT 2042017**

(43) Veröffentlichungstag der Anmeldung:
**21.11.2018   Patentblatt 2018/47**

(73) Patentinhaber: **Joanneum Research Forschungsgesellschaft mbH**
**8010 Graz (AT)**

(72) Erfinder:
• **Nees, Dieter**
  **8160 Thannhausen (AT)**
• **Stadlober, Barbara**
  **8044 Graz (AT)**

(74) Vertreter: **Strehl Schübel-Hopf & Partner**
**Maximilianstrasse 54**
**80538 München (DE)**

(56) Entgegenhaltungen:
EP-A2- 0 358 949          DE-A1-102008 050 605
US-A1- 2005 056 189          US-A1- 2008 044 627

**Beschreibung**

**Gebiet der Erfindung**

Die vorliegende Erfindung betrifft ein Verbundgebilde mit selektiver Oberflächenbeschichtung, ein Verfahren zur Herstellung desselben, insbesondere ein Verfahren zur selektiven Beschichtung von glatten Oberflächenbereichen von Lackschichten bzw. Folienelementen für technische Anwendungen, und die Verwendung desselben beispielsweise als optisches Element.

**Stand der Technik**

Bei der Herstellung von optischen Elementen, wie Linsen, Lichtfiltern, sowie elektronischen Bauteilen, wie Sensoren, Dekorelementen und dergleichen ist eine selektive und exakt passgenaue Beschichtung von glatten Oberflächenbereichen mit metallischen oder andersartigen (beispielsweise halbleitenden oder dielektrischen oder sensorischen) Schichten zwingend erforderlich.

Insbesondere sind solche passgenauen Beschichtungen bei miniaturisierten Elementen schwierig herzustellen.

US 4044177 A offenbart ein Produkt, bei dem höherliegende Flächen beschichtet und tieferliegende Flächen nicht beschichtet sind. Die zu beschichtende Fläche liegt komplett höher als die nicht zu beschichtende, so dass eine zweistufige Oberfläche vorliegt, und zwar eine Stufe mit durchgehend hohen und eine Stufe mit durchgehend tiefen Bereichen.

DE 10 2008 050605 A1, US 2008/044627 A1, US 2005/056189 A1 und EP 0 358 949 A2 offenbaren Verbundgebilde, die eine Trägerschicht, eine gehärtete Prägelackschicht und eine Funktionsschicht in dieser Reihenfolge umfassen.

**Durch die Erfindung zu lösende Aufgaben**

Der Stand der Technik offenbart keine miniaturisierten Elemente mit passgenauen Beschichtungen und keine Verfahren zur Herstellung derselben.

Daher ist die Aufgabe der vorliegenden Erfindung die Bereitstellung eines Verbundgebildes, in dem eine Funktionsschicht passgenau auf eine Vertiefungen aufweisende Schicht aufgetragen ist, und eines Verfahren zur selektiven Beschichtung von insbesondere glatten Oberflächenbereichen, bei dem eine exakte passgenaue Übereinstimmung des glatten Oberflächenbereiches mit einer Schicht, z. B. einer metallischen Reflexionsschicht gewährleistet wird, sowie der Verwendung des Verbundgebildes beispielsweise als optisches Element.

**Zusammenfassende Darstellung der Erfindung**

Die Aufgabe wurde durch Bereitstellen eines Verbundgebildes, eines Verfahrens und einer Verwendung gemäß der Patentansprüche gelöst.

Der Gegenstand der vorliegenden Erfindung ist insbesondere folgendes:

[1] Verbundgebilde, das eine Trägerschicht (1), eine gehärtete Prägelackschicht (2) und eine Funktionsschicht (3) in dieser Reihenfolge umfasst, wobei die gehärtete Prägelackschicht (2) einen Bereich aufweist, der eine geprägte und von der Funktionsschicht (3) freie Vertiefung (4) einer Tiefe von 1 bis 200 $\mu$m umfasst und der außerhalb der Vertiefung vollständig mit der Funktionsschicht (3) bedeckt ist, wobei das Verhältnis der Tiefe der Vertiefung (4) zu dem Mittenrauwert Ra des Bereichs außerhalb der Vertiefung (4) mindestens 20 beträgt.

[2] Verbundgebilde nach [1], wobei das Tiefen-zu-Breiten-Verhältnis der Vertiefung (4) mindestens 1,0 beträgt.

[3] Verbundgebilde nach einem der vorstehenden Punkte, wobei das Verhältnis der Tiefe der Vertiefung (4) zu dem Mittenrauwert Ra mindestens 50 beträgt.

[4] Verbundgebilde nach einem der vorstehenden Ansprüche, wobei der Mittenrauwert Ra der gehärteten Prägelackschicht (2) höchstens 20 nm beträgt.

[5] Verbundgebilde nach einem der vorstehenden Ansprüche, wobei das Verhältnis $(1-\Phi s)/(r-\Phi_s)$ kleiner 0,5 ist, worin $\Phi_s$ der Plateauflächenanteil der gehärteten Prägelackschicht (2) und r der als Quotient aus tatsächlicher Oberfläche und ihrer horizontalen Projektion definierte Rauheitsfaktor der gehärteten Prägelackschicht (2) ist.

[6] Verbundgebilde nach einem der vorstehenden Punkte, wobei das Tiefen-zu-Breiten-Verhältnis der Vertiefung (4) mindestens 2,0 beträgt, das Verhältnis der Tiefe der Vertiefung (4) zu dem Mittenrauwert Ra der gehärteten Prägelackschicht (2) mindestens 50 beträgt und das Verhältnis $(1-\Phi_s)/(r-\Phi_s)$ kleiner 0,3 ist.

[7] Verbundgebilde nach einem der vorstehenden Punkte, wobei die Vertiefung (4) einen V-förmigen Querschnitt aufweist.

[8] Verbundgebilde nach einem der vorstehenden Ansprüche, wobei mindestens zwei Vertiefungen (4) als Mikrokanäle mit V-förmigem Querschnitt in einem Abstand von weniger als der Breite eines dieser Kanäle parallel zueinander angeordnet sind.

[9] Verbundgebilde nach einem der vorstehenden Punkte, wobei die gehärtete Prägelackschicht (2) herstellbar ist aus Lackzusammensetzungen auf Basis von Polyethylenglykoldiacrylaten mit 1 bis 10 Massenprozent an höherfunktionellen Acrylaten, auf Basis von Acryloylmorpholin mit 10 bis 50 Massenprozent an höherfunktionellen Acrylaten oder auf Basis von hochvernetzenden multifunktionellen Polyether-, Polyester- oder Polyurethan-Acrylatsystemen.

[10] Verbundgebilde nach einem der vorstehenden Punkte, wobei die Funktionsschicht (3) herstellbar ist aus Metallen, wie Al, Sn, Cu, Zn, Pt, Pd, Au, Ag, Cr, Ti, Ni, Mo, Fe oder deren Legierungen, wie z.B. Cu-Al, Cu-Sn, Cu-Zn, Eisenlegierungen, Stahl, Edelstahl, Metallverbindungen, einem anorganischen Halbleiter, metalloxidischen Halbleiter oder aufdampfbaren molekularen organischen Halbleiter aus der aus Acenen, Thienoacenen oder Fullerenen bestehenden Gruppe, Phthalocyaninen, Thiophenen oder Blendmaterialien, Kohlenstoffnanoröhrchen, einer dielektrischen Schicht, oxidischen Dielektrika oder löslichen Polymeren, oder die Funktionsschicht (3) eine sensorischen Schicht umfasst.

[11] Verfahren zur selektiven Beschichtung von Oberflächenbereichen eines Verbundgebildes, das eine Trägerschicht (1), eine gehärtete Prägelackschicht (2) und eine Funktionsschicht (3) in dieser Reihenfolge aufweist, gekennzeichnet durch folgende Schritte in der angegebenen Reihenfolge:

    a) das Bereitstellen einer Trägerschicht (1),
    b) das Aufbringen einer Lackschicht auf die Trägerschicht (1),
    c) das Prägen einer Vertiefung (4) in die Lackschicht unter Bildung einer Prägelackschicht,
    d) das Härten der Prägelackschicht unter Bildung einer gehärteten Prägelackschicht (2),
    e) das Aufbringen einer ausschließlich die Vertiefung der geprägten Vertiefung der gehärteten Prägelackschicht (2) benetzenden und füllenden Ablöselackschicht (5),
    f) das Aufbringen einer Funktionsschicht (3) und
    g) das Einwirkenlassen eines Ablösemittels, wobei die Ablöselackschicht (5) und die darauf aufgebrachte Funktionsschicht (3) vollständig entfernt werden und die gehärtete Prägelackschicht (2) und die darauf aufgebrachte Funktionsschicht (3) nicht entfernt werden.

Vorzugsweise dient dieses Verfahren zur Herstellung eines Verbundgebildes nach Punkt [1].

[12] Verfahren nach [11], wobei Ungleichung (I) erfüllt ist:

$$\theta < \varphi = 90°\text{-}\alpha/2 \qquad\qquad (I)$$

worin $\theta$ der Kontaktwinkel ist, den der Ablöselack auf einer Plateaufläche der gehärteten Prägelackschicht (2) einnimmt, $\alpha$ der Öffnungswinkel einer Vertiefung (4) ist und $\varphi$ der Kantenwinkel der Seitenwände mit der Horizontalen ist.

[13] Verfahren nach [11] oder [12], wobei $\theta < \theta_c$ erfüllt ist, wobei

$$cos\theta_c = \frac{1-\phi_s}{r-\phi_s}$$

worin $\theta$ der Kontaktwinkel ist, den der Ablöselack auf einer Plateaufläche der gehärteten Prägelackschicht (2)

einnimmt, $\theta_c$ der kritische Kontaktwinkel des Ablöselacks auf einer die Vertiefung (4) aufweisenden Fläche der gehärteten Prägelackschicht (2) ist, r der Rauheitsfaktor der gehärteten Prägelackschicht (2) und $\Phi_s$ der Plateauflächenanteil der gehärteten Prägelackschicht (2) ist.

[14] Verfahren nach einem der Punkte [11] bis [13], wobei der Ablöselack herstellbar ist aus Zusammensetzungen auf Basis von 4-Acryloylmorpholin oder Isobornylacrylat.

[15] Verwendung des Verbundgebildes nach einem der Punkte [1] bis [10] als optisches Element, Lichtfilter, (opto)elektronisches Bauteil, Sensor oder Dekorelement.

## Vorteile der Erfindung

In dem erfindungsgemäßen Verfahren wird durch gezielte Vorstrukturierung mittels eines Prägeprozesses eine definierte, lokal begrenzte Benetzung von verschiedenen Lacken auf einer Folienoberfläche erreicht.

In Kombination mit nachfolgender Beschichtung im Vakuum (z.B. Sputtern, Aufdampfen) oder auch aus der Lösung und Lift-off führt dies zur Herstellung einer selbstjustierten lokal begrenzten Beschichtung und Benetzung (z.B. in einem Druckverfahren).

Insbesondere wird damit die selbstjustierte und selektive Beschichtung von Flächen mit hinreichend flachen Nanostrukturen oder glatter Oberfläche durch funktionelle Schichten aus Metallen, Metalloxiden, anorganischen und organischen Halbleitern oder Polymeren ermöglicht.

Die erfindungsgemäßen Verbundgebilde, die bevorzugt Folienelemente sind, können als optische Elemente, wie Linsen, als Lichtfilter, elektronische Bauteile, wie Sensoren, Dekorelemente und dergleichen verwendet werden.

## Beschreibung der Figuren

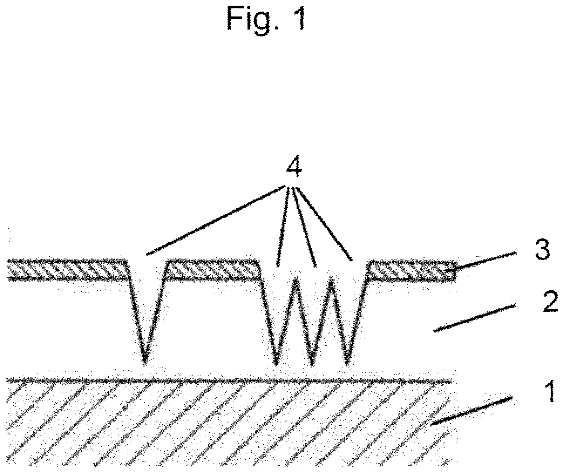

Figur 1 zeigt ein erfindungsgemäßes Verbundgebilde.

Figuren 2a bis 2e zeigen den Verfahrensablauf zur Herstellung eines erfindungsgemäßen Verbundgebildes am Beispiel von selektiv beschichteten diffraktiven Strukturen oder mit glatten Oberflächenbereichen.

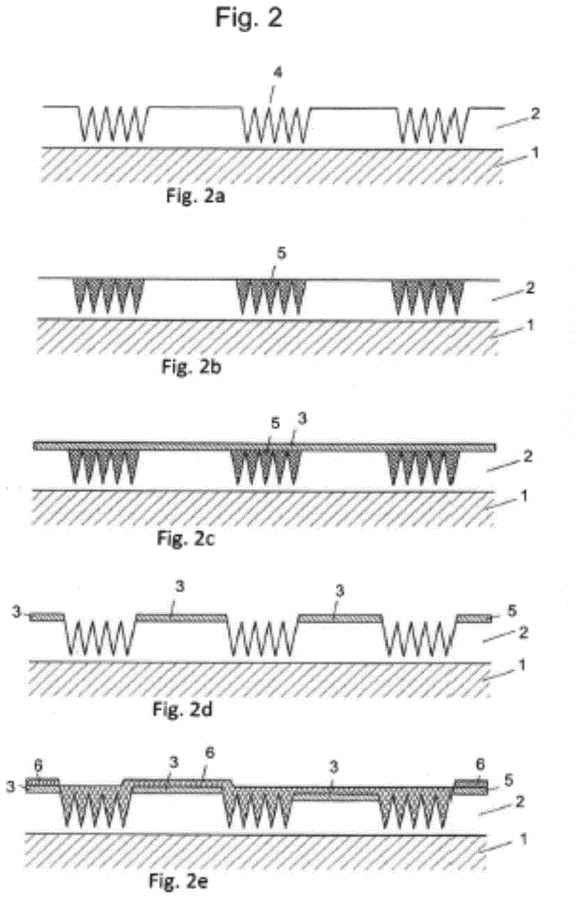

Dabei zeigt Fig. 2a die Oberflächenstrukturierung der auf einem Trägersubstrat (1) aufgebrachten gehärteten Prägelackschicht (2) mit glatten Oberflächenbereichen und Mikrokanälen als Vertiefungen (4).

Fig. 2b zeigt das Verbundgebilde nach dem Verteilen des aufgebrachten Ablöselacks (5) in den Mikrokanälen (4), wobei die Oberfläche im Bereich der glatten Bereiche von der Ablöselackschicht aufgrund des Wicking-Effekts nicht benetzt wird.

Fig. 2c zeigt das Verbundgebilde nach Beschichten der Prägelackschicht und der Ablöselackschicht mit einer vollflächigen reflektierenden metallischen Schicht als Funktionsschicht (3). Diese metallische Schicht kann gegebenenfalls auch bereits partiell aufgebracht werden, wobei zumindest die glatten Bereiche sowie teilweise die angrenzenden Mikrokanäle mit der metallischen Reflexionsschicht versehen werden müssen.

Fig. 2d zeigt das Verbundgebilde nach Entfernen der Ablöselackschicht zusammen mit der über dieser Lackschicht befindlichen Reflexionsschicht durch Einwirkung eines Lösungsmittels oder von Wasser, wobei die Ablösung gegebenenfalls durch mechanische Einwirkung oder Ultraschall unterstützt werden kann.

Die metallische Reflexionsschicht als Funktionsschicht (3) ist absolut deckungsgleich mit dem Bereich der glatten Oberfläche der Schicht (2).

Fig. 2e zeigt das Verbundgebilde nach Aufbringen einer weiteren Schicht (6), die eine Schutzlackschicht oder eine weitere funktionelle Schicht sein kann.

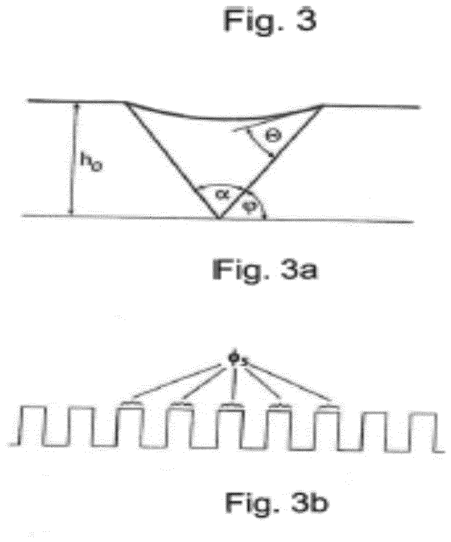

Figuren 3a und 3b veranschaulichen wichtige Parameter in dem erfindungsgemäßen Verbundgebilde, insbesondere in der gehärteten Prägelackschicht (2) mit der Vertiefung (4).

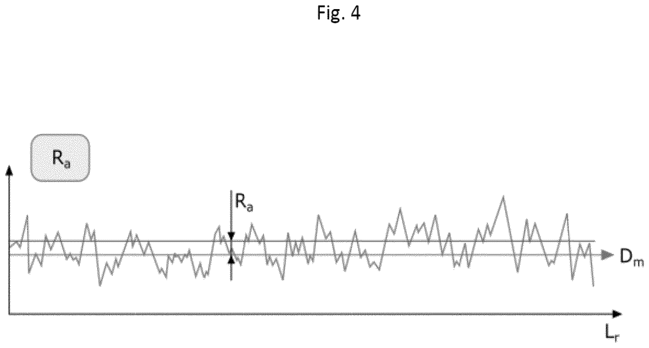

Figur 4 veranschaulicht die Methode zur Ermittlung des Mittenrauwerts Ra.

**Ausführungsformen der Erfindung**

Das erfindungsgemäße Verbundgebilde wird nachfolgend eingehend beschrieben.

Wenn in der vorliegenden Erfindung für die Bezeichnung von Elementen oder Strukturen die Einzahl verwendet wird, beispielsweise "ein Mikrokanal" oder "die Vertiefung", soll damit eine Mehrzahl dieser Elemente oder Strukturen ausdrücklich nicht ausgeschlossen sein, so dass die beispielhaften Bezeichnungen gleichbedeutend sind mit "mindestens ein Mikrokanal" bzw. "die mindestens eine Vertiefung", sofern nichts Gegenteiliges angegeben ist.

Trägerschicht (1)

Die Trägerschicht wird auch einfach als "Schicht (1)" bezeichnet.

Die Trägerschicht ist ein Trägersubstrat, auf das eine Prägelackschicht aufgetragen werden kann. Das Material des Trägersubstrats ist nicht besonders eingeschränkt. Auch die Rauheit der Oberfläche ist nicht eingeschränkt, da durch Auftragen der Prägelackschicht ggf. vorhandene Höhen oder Tiefen ausgeglichen werden, so dass eine glatte Prägelackschicht erhalten werden kann.

Es kommen beispielsweise Trägerfolien, vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC, PTFE, ETFE (Ethylentetrafluorethylen), PTFE (Polytetrafluorethylen), PVF (Polyvinylfluorid), PVDF (Polyvinylidenfluorid), und EFEP (Ethylen-Tetrafluorethylen-Hexafluorpropylen-Fluorterpolymer) in Betracht.

Die Trägerschicht, z. B. die Trägerfolie, weist vorzugsweise eine Dicke von 5 bis 700 $\mu$m, bevorzugt 5 bis 200 $\mu$m, besonders bevorzugt 5 bis 50 $\mu$m auf.

Gehärtete Prägelackschicht (2)

Die gehärtete Prägelackschicht (2) oder kurz "Schicht (2)" umfasst eine Plateaufläche und eine Vertiefung (4). Die Plateaufläche ist glatt.

Die Schicht (2) wird wie folgt erhalten.

Auf Schicht (1) wird eine härtbare Lackschicht aufgebracht. Die Lackschicht und die Prägelackschicht sind identisch mit der Ausnahme, dass die Prägelackschicht eine Prägung aufweist. Die Prägung erfolgt in mindestens einem Teilbereich der Lackschicht. Nach dem Prägen wird die gesamte Lackschicht als Prägelackschicht bezeichnet. Eine Prägung umfasst eine Vertiefung in der Ebene der Lackschicht.

Die Lackschicht ist härtbar, z. B. thermisch härtbar oder bevorzugt strahlungshärtbar. Vorzugsweise werden bei dieser Härtung kovalente Bindungen zwischen dem Substrat und der Prägelackschicht ausgebildet. In diese Lackschicht werden Vertiefungen (4) durch Prägen eingebracht, so dass eine Prägelackschicht entsteht. Diese Vertiefungen können Mikrokanäle sein. Das Prägen von Vertiefungen dient dazu, der Lackschicht die gewünschte Rauheit zu verleihen.

Unter Vertiefungen, insbesondere ggf. V-förmigen Mikrokanälen, werden hier Strukturen verstanden, die eine Tiefe und Breite von jeweils 1 bis 200 $\mu$m, bevorzugt 1 bis 20 $\mu$m aufweisen, wobei das Tiefen-zu-Breiten-Verhältnis dabei vorzugsweise größer oder gleich 1,0, stärker bevorzugt mindestens 2,0 oder mindestens 5,0 beträgt.

Der Übergang von der Vertiefung zu der Ebene der Prägelackhartschicht ist vorzugsweise kantig und nicht abgerundet. Abrundungen dürfen nur in der Größenordnung des Mittenrauwerts der angrenzenden Ebene vorhanden sein, vorzugsweise als Abtragung der extrapolierten Kante bis zur Rundung in der Winkelhalbierenden von höchstens dem Fünffachen, stärker bevorzugt höchstens dem Zweifachen des Mittenrauwerts. Im Fall einer senkrechten Vertiefung ist der Übergang eine Kante mit rechtem Winkel. Im Fall einer konischen, also V-förmigen Vertiefung bildet die Kante im Querschnitt einen stumpfen Winkel.

Eine V-förmige Vertiefung bedeutet in der vorliegenden Erfindung eine Geometrie mit beiderseits konvexen Kanten, das heißt, dass beiderseits der Außenwinkel des Übergangs von der Ebene der Prägelackschichtoberfläche zu der Vertiefung von weniger als 270° beträgt, was zu einer sich nach unten verjüngenden Struktur führt. Dieser Außenwinkel entspricht 180° plus Kantenwinkel $\varphi$ (vgl. Figur 3a). Der Boden der V-förmigen Vertiefung kann spitz oder abgerundet sein. Eine Rundung erschwert die Benetzung des Bodens der Vertiefung. Dies kann in Ausführungsformen der Erfindung unerwünscht sein. Aus dem gleichen Grund können Rundungen in Kanälen mit rechtwinkligen Seitenwänden, so dass eine U-Form entsteht, weniger bevorzugt sein.

Der Mikrokanal weist vorzugsweise einen V-förmigen Querschnitt und vorzugsweise eine Tiefe von 15 bis 30 $\mu$m und eine Öffnungsbreite von 5 bis unter 15 $\mu$m auf.

Im Unterschied zu den Vertiefungen (4) weisen die in der vorliegenden Erfindung genannten Nanostrukturen eine Tiefe von mehr als 50 nm und weniger als 1000 nm, vorzugsweise weniger als 500 nm, sowie ein Tiefen-zu-Breiten-Verhältnis von kleiner 1,0, vorzugsweise kleiner 0,5 auf.

Die Prägelackschicht wird ausgehärtet, vorzugsweise unter UV-Bestrahlung oder mittels Elektronenstrahl, so dass schließlich die gehärtete Prägelackschicht (2) entsteht.

Besonders geeignete UV-vernetzbare Prägelackzusammensetzungen sind beispielsweise Prägelacke auf Basis Polyethylenglykol-Diacrylaten (PEGDA), ggf. mit 1-10 Massenprozent an höherfunktionalen Acrylaten, wie Trimethylolpropantriacrylat (TMPTA) oder Pentaerythritoltetraacrylat (PETTA) oder Mischungen von Acryloyl-Morpholin (ACMO) mit 10 - 50 Massenprozent an höherfunktionalen Acrylaten, wie Trimethylolpropantriacrylat (TMPTA) oder Pentaerythritoltetraacrylat (PETTA), oder Lacksysteme auf Basis von hochvernetzenden multifunktionellen Polyether-, Polyester- oder Polyurethan-Acrylatsystemen, beispielsweise Polyetherpolyoltriacrylaten, multi-ethoxylierten Trimethylolpropantriacrylaten oder multi-ethoxylierten Bisphenol-A-Diacrylaten.

Besonders bevorzugt sind Polyethylenglykoldiacrylate, Trimethylolpropantriacrylat, Acryloylmorpholin, Pentaerythritoltetraacrylat, Hexandioldiacrylat und trifunktionelles UrethanAcrylat-Oligomer.

In der vorliegenden Erfindung umfasst ein mit dem Ausdruck "Acryl" bezeichneter Verbindungsbestandteil immer auch das Derivat "Methacryl", falls nichts Gegenteiliges angegeben ist. Beispielsweise soll mit dem Rest "Acrylat" also auch der Rest Methacrylat" abgedeckt sein.

Der Prägelack kann 0,5 bis 5 Massenprozent Photoinitiatoren enthalten, die die Vernetzung unter UV-Strahlung bewirken, beispielsweise Photoinitiatoren auf Basis von Acylphosphinoxiden, oder oligomerer polyfunktionaler Alphahydroxyketone oder monomerer Alphahydroxyketone.

Besonders geeignete Photoinitiatoren sind beispielsweise Photoinitiatoren auf Basis von Acylphosphinoxiden, wie Iragure 819®, Genocure TPO®, Genocure BAPO® oder oligomere polyfunktionale Alphahydroxyketone wie Esacure KIP 150®, monomere Alphahydroxyketone wie Irgacure 184 oder Darocure 1173®. Es können aber auch Mischungen dieser Photoinitiatoren eingesetzt werden.

Die Oberfläche des aus Schicht (1) und Schicht (2) bestehenden Verbundgebildes weist die durch das Prägen erhaltenen Vertiefungen auf und ist außerhalb der Vertiefungen glatt. Die Glattheit der Oberfläche der Schicht (2) im Bereich außerhalb der Mikrokanäle kann für das erfindungsgemäße Verfahren funktionell definiert werden. Das funktionelle Mindesterfordernis bezüglich der Glattheit der Oberfläche der Prägelackschicht ist, dass die Oberfläche nur solche Strukturen aufweist, die von einer gegebenen Ablöselackschicht nicht benetzt und nicht gefüllt werden. Das heißt, dass die Oberfläche Strukturen aufweisen kann, deren Tiefe in Abhängigkeit von der Struktur und Tiefe der Mikrokanäle und der Art des Ablöselackes variieren kann.

Die Glattheit bzw. Rauheit der Oberfläche der Prägelackschicht kann aber auch strukturell definiert werden. In diesem Fall müssen bei einer gegebenen Prägelackschicht die Materialien und damit die Eigenschaften der Ablöselackschicht zum Erzielen der gewünschten Wirkung entsprechend ausgewählt werden.

In der vorliegenden Erfindung ist die Glattheit bzw. Rauheit einer Oberfläche definiert durch den Mittenrauwert Ra. Zur Ermittlung dieses Messwertes wird die Oberfläche auf einer definierten Bezugsstrecke abgetastet und sämtliche Höhen- und Tiefenunterschiede der rauen Oberfläche aufgezeichnet. Nach der Berechnung des bestimmten Integrals dieses Rauheitsverlaufes auf der Messstrecke wird abschließend dieses Ergebnis durch die Länge der Messstrecke dividiert. Der arithmetische Mittenrauwert Ra ist der rechnerische Mittelwert aller Abweichungen des Rauheitsprofils von der mittleren Linie entlang der Messstrecke. Der Mittenrauwert Ra wird unter Bezugnahme auf Fig. 4 wie folgt bestimmt:

$$R_a = \frac{1}{Lr} \int\limits_0^{Lr} |z(x)| dx$$

Die Bezugsfläche für die Messstrecke und damit für die Bestimmung des Mittenrauwerts Ra auf der Oberfläche der Schicht (2) ist, wenn nichts anderes angegeben wird, die gesamte der Schicht (1) abgewandte Oberfläche der Schicht (2) abzüglich der Vertiefungen (4) und ggf. vorhandener Nanostrukturen. Die Bezugsfläche kann jedoch auch eingeschränkt sein und aus einem Bereich links und einem Bereich rechts der Vertiefung (4) bestehen, welcher jeweils der Breite der Vertiefung (4) entspricht. Wenn mehrere Vertiefungen (4) nebeneinander vorhanden sind und deren Abstand, also der Steg dazwischen, weniger als der Breite der Vertiefungen (4) ist, wird die Oberfläche der Schicht (2) in diesem Abstandsbereich in die Bezugsfläche einbezogen.

Die Glattheit ist relativ und bezieht sich auf die Ausmaße der Mikrokanäle. Das heißt, dass die Oberfläche glatter sein muss, wenn die Mikrokanäle beispielsweise eine geringere Tiefe aufweisen.

Diese Beziehung kann durch das Verhältnis der maximalen Tiefe einer vorzugsweise V-förmigen Vertiefung (4) zu dem Mittenrauwert Ra der Bezugsfläche der gehärteten Prägelackoberfläche (2) ausgedrückt werden. Dieses Tiefen-zu-Mittenrauwert-Verhältnis kann als TMV abgekürzt werden.

Das TMV ist in dem erfindungsgemäßen Verbundgebilde vorzugsweise größer als 20, stärker bevorzugt größer als 50, noch stärker bevorzugt größer als 100 oder größer als 500.

In der vorliegenden Erfindung gilt für die gehärtete Prägelackschicht (2) ganz allgemein, dass der Ausdruck "glatt" sich auf die Oberfläche bezieht, die außerhalb der Vertiefungen und außerhalb ggf. vorhandener Nanostrukturen liegt und ein TMV von größer als 20, bevorzugt größer als 50, stärker bevorzugt größer als 100 oder größer als 500 aufweist.

Die in dem erfindungsgemäßen Verbundgebilde enthaltene glatte gehärtete Prägelackschicht (2) erfüllt also das Mindesterfordernis eines TMV von größer als 20.

Neben dieser allgemeinen Definition kann der Ausdruck "glatt" auch spezieller definiert sein. In der vorliegenden Erfindung gilt für die gehärtete Prägelackschicht (2), dass der Ausdruck "glatt" sich auf die Oberfläche bezieht, die außerhalb der Vertiefungen und außerhalb ggf. vorhandener Nanostrukturen liegt und die einen Mittenrauwert Ra von weniger als 50 nm aufweist. Bevorzugt ist ein Mittenrauwert von weniger als 20 nm oder weniger als 10 nm.

Der Mittenrauwert Ra der gehärteten Prägelackschicht (2) kann auch als Ra(2) bezeichnet werden.

Die Oberfläche der gehärteten Prägelackschicht ist über die gesamte Bezugsfläche glatt.

Der in der vorliegenden Erfindung verwendete Ausdruck "glatt" bedeutet also, dass eine Fläche, insbesondere die Schicht (2), die genannten Erfordernisse erfüllt. Im Gegensatz dazu weist eine "raue" Fläche Werte außerhalb des Werts für die glatte Fläche auf.

Die Oberflächen der Vertiefung (4), also die Seitenwände und ggf. der Boden, weisen vorzugsweise denselben Mittenrauwert Ra auf wie die Oberfläche der Prägelackschicht.

In der vorliegenden Erfindung wird die Rauheit einer Oberfläche mittels Rasterkraftmikrokopie (AFM), Profilometrie oder optischen Methoden wie Weißlicht-Interferometrie gemessen.

Das Breiten-zu-Tiefen-Verhältnis (im Folgenden auch "BTV" genannt) einer Vertiefung (4) ist das Verhältnis der maximalen Breite des vorzugsweise V-förmigen Mikrokanals zu der maximalen Tiefe der Vertiefung (4) auf der Oberfläche der Schicht (2). Dieses Verhältnis BTV ist vorzugsweise größer als 1,0, stärker bevorzugt größer als 2,0 und noch stärker bevorzugt größer als 5.

Ausführungsformen der Erfindung weisen eine Kombination von TMV > 20 und BTV > 1,0 oder eine Kombination von TMV > 50 und BTV > 2,0 oder eine Kombination von TMV > 100 und BTV > 2,0 auf, oder eine Kombination von TMV > 20 und BTV > 5,0 oder eine Kombination von TMV > 50 und BTV > 2,0 oder eine Kombination von TMV > 100 und BTV > 1,0 auf. Mit anderen Worten ist vorzugsweise die Tiefe der Vertiefung (4) größer als ihre Breite und außerdem sehr viel größer als die Unebenheiten der Bezugsfläche der Schicht (2).

Jede dieser Kombinationen muss die Mindestanforderungen zum Erzielen einer selektiven Befüllung und Benetzung der Vertiefungen (4) erfüllen. Der Fachmann kann von diesen Kombinationen ausgehen und anhand der Beschreibung zum Wicking-Effekt für gegebene Materialien der Schicht (2) und der Schicht (5) die Ausführungsformen bestimmen, welche zum gewünschten Erfolg führen.

Vertiefung (4)

Die Vertiefung (4) ist in einer Ausführungsform ein Mikrokanal. Die Beschreibungen zu Mikrokanälen gelten in der vorliegenden Erfindung gleichermaßen für Vertiefungen (4) im Allgemeinen.

Eine Vertiefung weist eine Länge (x), ein Breite (y) und eine Tiefe (T) auf.

Die Angabe einer "Tiefe" bezieht sich auf das maximale Ausmaß, also den tiefsten Punkt, in T-Richtung in Bezug auf die die Vertiefung unmittelbar umgebende Oberfläche.

Die Angabe einer "Breite" bezieht sich auf das Ausmaß in y-Richtung am obersten Punkt der Vertiefung.

Wenn die Länge einer Vertiefung ein Vielfaches ihrer Breite beträgt, also mindestens das Zweifache, vorzugsweise mindestens das Fünffache und stärker bevorzugt mindestens das Zehnfache, kann sie vorzugsweise auch als Mikrokanal bezeichnet werden.

Das Einbringen eines Mikrokanals in die Prägelackschicht in dem erfindungsgemäßen Verfahren schließt das Einbringen mehrerer Mikrokanäle nicht aus. Bevorzugt werden mehrere, also mindestens zwei, stärker bevorzugt mindestens fünf und noch stärker bevorzugt mindestens zehn Mikrokanäle eingebracht, die noch stärker bevorzugt zumindest in Teilbereichen parallel zueinander sind. Wo sie parallel sind, sind sie besonders bevorzugt nahe aneinander angeordnet, so dass zwischen zwei Mikrokanälen Stege entstehen. Die Breite dieser Stege ist in einer Ausführungsform geringer als die Breite eines Mikrokanals, bevorzugt geringer als die halbe Breite, stärker bevorzugt geringer als ein Fünftel oder ein Zehntel der Breite eines Mikrokanals. Das heißt, dass im Querschnitt gesehen zwischen zwei Mikrokanälen die Oberfläche des Trägersubstrat-Prägelack-Verbundgebildes eine Breite aufweist, die geringer ist als die Breite der Mikrokanäle.

In einer Ausführungsform liegen V-förmige Mikrokanäle unmittelbar aneinander, so dass der Steg nur noch als Spitze von zwei aufeinandertreffenden Seitenwänden benachbarter Mikrokanäle vorhanden ist. Diese Spitze ist vorzugsweise in T-Richtung auf der gleichen Höhe wie die Oberfläche der Prägelackschicht. Solcherart können auch mehr als zwei Mikrokanäle angeordnet sein. Sind beispielsweise mindestens fünf Mikrokanäle unmittelbar nebeneinander angeordnet, kann in diesem Bereich die Rauheit der gehärteten Prägelackoberfläche maximiert werden und der Plateauflächenanteil $\Phi_s$ bis auf Null gesenkt werden.

Das erfindungsgemäße Verbundgebilde weist eine gehärtete Prägelackschicht (2) mit einer Funktionsschicht (3) und eine funktionsschichtfreie Vertiefung (4) auf. Dabei bedeutet funktionsschichtfrei, dass die Vertiefung (4) frei von der genannten Funktionsschicht (3) ist. Andere Funktionsschichten, die sich in ihrer Zusammensetzung und/oder strukturell von der Funktionsschicht (3) unterscheiden, oder weitere Schichten (6) können hingegen ohne Einschränkung auch in der Vertiefung (4) enthalten sein.

Ablöselackschicht (5)

Die Ablöselackschicht wird auch als Lift-Off-Lackschicht bezeichnet und einfach als "Schicht (5)" abgekürzt.

Nach Aushärtung der Prägelackschicht wird eine entfernbare, insbesondere lösliche, Ablöselackschicht aufgebracht. Das Lösungsmittel ist beispielsweise ein organisches Lösungsmittel oder Wasser.

Besonders geeignete Ablöselackzusammensetzungen sind beispielsweise Hydroxyethylcaprolactonacrylat wie HECLA® von BASF oder Miramer M100®. von Miwon, Ethoxyethoxyethylacrylat wie Miramer M170® von Miwon oder EDGA® von BASF, 2-Ethoxyethylacrylat wie Viscoat 190® von Kowa, Tetrahydrofurfurylacrylate wie Miramer M150® von Miwon oder Sartomer 302®, Viscoat 150®, Gamma-Butylolactonacrylat wie GBLA® von Kowa, 4-Acryloylmorpholin wie ACMO® von Rahn oder Luna ACMO® von DKSH, Hydroxypropylacrylat wie HPA® von BASF, Isobornylacrylat wie IBOA® von Allnex oder IBXA® von Kowa, oder Isobornyl-, Cyclohexyl-, tert-Butyl-, 4-tert-Butylcyclohexyl-, 3,3,5-trimethyl cyclohexyl-, 1-Adamantyl-, 2-Adamantyl-, 2-Methyl-2-Adamantyl-, Tetrahydrofuran- (THF-)-Acrylat.

Der Ablöselack kann 0,5-5 Massenprozent an Photoinitiatoren enthalten, wie beispielsweise Photoinitiatoren auf Basis von Acylphosphinoxiden, wie Iragure 819®, Genocure TPO®, Genocure TPO-L®, Genocure BAPO® oder oligomere polyfunktionale Alphahydroxyketone wie Esacure KIP 150®, monomere Alphahydroxyketone, wie Irgacure 184 oder Darocure 1173®. Es können aber auch Mischungen dieser Photoinitiatoren eingesetzt werden.

Isobornylacrylat kann als Ablöselack auf Grund seiner geringen Oberflächenspannung und damit eines geringen Kontaktwinkels auch in Verbindung mit Prägelacken geringerer Oberflächenenergie, wie beispielsweise Polyurethanacrylat-basierten Prägelacken verwendet werden.

Der Ablöselack kann entweder polare Restgruppen wie im Fall 4-Acryloylmorpholin (ACMO) oder unpolare Restgruppen wie im Fall Isobornylacrylat enthalten. Die Polarität kann in Abhängigkeit von der Polarität der Prägelackschicht passend eingestellt werden.

Die Ablöselackschicht kann auch nur im Bereich der Mikrokanäle aufgetragen, z. B. gedruckt werden.

Die Ablöselackschicht ist durch Einwirkung eines Ablösemittels entfernbar. Das Ablösemittel ist vorzugsweise ein Lösungsmittel, worin die Ablöselackschicht löslich ist. Das Lösungsmittel ist ein organisches Lösungsmittel oder ein wässriges Lösungsmittel oder ein Gemisch davon. Das Ablösemittel kann aber auch ganz allgemein jede Maßnahme sein, die zum Entfernen der Ablöselackschicht geeignet ist oder das Entfernen unterstützt. Dazu gehört das Aufbringen des Ablösemittels unter Druck, die Behandlung mit Ultraschall oder mit erhöhter Temperatur zum Schmelzen oder eine Kombination davon. Es kann bevorzugt sein, das Einwirken eines Lösungsmittels mit einer dieser anderen Maßnahmen zu kombinieren.

Das Ablösemittel hat vorzugsweise keine Auswirkung auf die Haftung der Prägelackschicht (3) auf dem Trägersubstrat. Diese Bindung ist also vorzugsweise inert gegen das Ablösemittel, beispielsweise durch Ausbildung kovalenter Bindungen beim Härten des Prägelacks.

Abstimmung der Parameter

Das selektive Benetzen und Befüllen der Vertiefung wird erreicht, indem die entscheidenden Parameter aufeinander abgestimmt werden. Diese Parameter sind insbesondere die Oberflächenbeschaffenheiten der gehärteten Prägelackschicht (2) und das Material der Ablöselackschicht (5).

Die entscheidende Oberflächenbeschaffenheit ist die Rauheit. Besonders wichtig ist der Unterschied zwischen der Rauheit der Prägelackschicht (2) und der Tiefe der Vertiefung (4) sowie das Tiefen-zu-Breiten-Verhältnis der Vertiefung (4).

Das Material des Ablöselacks zu Bildung der Schicht (5) muss im Hinblick auf die Oberflächenenergie auf die Oberflächenbeschaffenheit der Schicht (2) abgestimmt sein, damit der Ablöselack ausschließlich die Mikrokanäle benetzt und gefüllt. Dabei wird erfindungsgemäß der sogenannte Wicking-Effekt ausgenutzt.

Ist beispielweise die Ablöselackschicht eine in Wasser lösliche Lackschicht, so muss die Prägelackschicht eine hohe Oberflächenenergie aufweisen. Diese Oberflächenenergie ist vorzugsweise höher als 40 mN/m.

Der Wicking-Effekt, das heißt das spontane Benetzen eines Mikrokanals mit einer Flüssigkeit (z.B. einem Ablöselack), basiert auf einer Abstimmung der Oberflächenenergie von Prägelack und Ablöselack (gekennzeichnet durch den Kontaktwinkel $\theta$, den der Ablöselack auf einer glatten Fläche des Prägelacks einnimmt) und der Geometrie der Mikrokanäle (gekennzeichnet durch den Öffnungswinkel $\alpha$ eines Kanals mit sich nach unten verjüngendem Querschnitt, also z.B. eines Kanals mit V-förmigem Querschnitt) beschrieben durch folgende Formel:

$$\theta < \varphi = 90° - \alpha/2 \qquad (I)$$

φ ist hier der Kantenwinkel der Seitenwände mit der Horizontalen. Formel I ist die sogenannte Concus-Finn Relation (P. Concus and R. Finn: On a class of capillary surfaces. J. Analyse Math. 23 (1970), 65-70.), die beschreibt, dass eine Flüssigkeit (hier Ablöselack) einen V-förmigen Kanal (im Prägelackmaterial) und nur diesen spontan benetzt, wenn der Kontaktwinkel kleiner als der Kantenwinkel ist. Für kleine Kanal-Öffnungswinkel ermöglicht die Concus-Finn Relation bei vielen Flüssigkeiten eine vollkommen ungehinderte Benetzung und Füllung des Kanals. Die Relation ist beispielsweise auch für einen Kanal gültig, dessen Seitenwände aus zwei Kreiszylindern gebildet werden, wodurch ein Öffnungswinkel von 0° in der Spitze bzw. am Boden des Kanals entsteht.

Die in dem erfindungsgemäßen Verfahren gewünschte selektive Benetzung und Befüllung erfordert also, dass der Kontaktwinkel θ, den der Ablöselack auf einer glatten Fläche der gehärteten Prägelackschicht (2) einnimmt, kleiner ist als der Kantenwinkel φ der Seitenwände mit der Horizontalen.

Um das Wickingverhalten auf strukturierten Oberflächen zu verstehen, ist außerdem auch Bedingung (II) wichtig

$$cos\theta_c = \frac{1-\phi_s}{r-\phi_s}, \quad \theta < \theta_c \qquad \text{(II)}$$

Hier bedeutet $\theta_c$ den kritischen Kontaktwinkel des Ablöselacks auf einer rauen oder strukturierten Fläche der gehärteten Prägelackschicht (2), der geometrisch bedingt ist und für das Benetzen bzw. Füllen eines Ablöselacks in den Kanälen unterschritten werden muss. Der kritische Kontaktwinkel wird durch den Rauheitsfaktor r und den Plateauflächenanteil $\Phi_s$ bestimmt. Der Plateauflächenanteil $\Phi_s$ ist definiert als der Anteil der glatten gehärteten Prägelackoberfläche in ihrer horizontalen Projektion an der Gesamtfläche der Schicht in ihrer horizontalen Projektion (vgl. Fig. 3b). Der Plateauflächenanteil ist also der Anteil der Oberfläche der gehärteten Prägelackschicht (2), die außerhalb der Vertiefungen (4) und außerhalb ggf. vorhandener Nanostrukturen liegt, an der Gesamtoberfläche der gehärteten Prägelackschicht in horizontaler Projektion.

Das Benetzen einer Fläche wird also bestimmt durch die Rauheit einer Oberfläche. Die Rauheit einer Oberfläche wird durch zwei geometrische Parameter gekennzeichnet, nämlich den Rauheitsfaktor r und den Plateauflächenanteil $\Phi_s$.

Ist Bedingung (II) erfüllt, kommt es zum Hemi-Wicking, d.h. nur die Kanäle werden gefüllt, während die Plateauflächen trocken bleiben.

Der Plateauflächenanteil $\Phi_s$ wird erfindungsgemäß vorzugsweise minimiert, so dass er gegen Null geht oder sogar gleich Null ist. Dies kann durch Erhöhen der Anzahl und der Breite der Vertiefungen (4) erfolgen. Insbesondere können mehrere Vertiefungen (4) nebeneinander oder sogar unmittelbar nebeneinander angeordnet werden. Auf diese Weise wird im Bereich der Mikrokanäle eine vollständig selektive Benetzung der Mikrokanäle erzielt.

Der Rauheitsfaktor r in Formel (II) ist der Quotient aus tatsächlicher Oberfläche und ihrer horizontalen Projektion, wie beispielsweise in Dinesh Chandra et al., "Dynamics of a droplet imbibing on a rough surface", Langmuir 2011, 27, 13401-13405 beschrieben.

Die Prägelackoberfläche ist glatt und weist einen geringen Mittenrauwert auf. Im Vergleich zu den Werten der Höhen und Tiefen der glatten Prägelackoberfläche sind die Werte für die Tiefen der Vertiefungen sehr groß. Deshalb wird in der vorliegenden Erfindung davon ausgegangen, dass der Rauheitsfaktor r der Prägelackoberfläche ausschließlich durch die Mikrokanäle bestimmt wird. Nur im Bereich der Mikrokanäle ist der Rauheitsfaktor r so groß, dass der kritische Kontaktwinkel unterschritten wird.

In der vorliegenden Erfindung bezieht sich der Rauheitsfaktor r daher ausschließlich auf die durch das Vorhandensein der Vertiefungen (4) entstehende Rauheit und nicht auf die durch die Unebenheiten der glatten Prägelackschicht entstehende und mit dem Mittenrauwert Ra bezeichnete Rauheit. Letztere wird für die Bestimmung des Rauheitsfaktors r vernachlässigt. Dadurch ist es möglich, auch am erfindungsgemäßen Verbundgebilde, also bei funktionsschichtüberzogener Prägelackschicht, den Rauheitsfaktor r durch Messung an der funktionsschichtfreien Vertiefung zerstörungsfrei zu bestimmen.

Der Rauheitsfaktor r als der Quotient aus tatsächlicher Oberfläche und ihrer horizontalen Projektion kann daher aus der theoretischen Geometrie der Mikrokanäle berechnet werden. Beispielsweise ist der Rauheitsfaktor r für V-förmige Kanäle mit einer Breite von 1 μm und einer Tiefe von 5 μm: [2 x (0,5² + 5² )^{1/2}]/1 = 10,1.

Wenn in der Formel (II) der Rauheitsfaktor r groß ist, wird cosθc klein, wodurch $\theta_c$ groß wird. Je größer also die Rauheit ist, beispielsweise die Tiefe der Vertiefung (4), desto größer ist der kritische Kontaktwinkel und damit die Gestaltungsfreit für die Herstellung und den Aufbau des Verbundgebildes. Beispielsweise unterschreitet bei größerer Rauheit der Kontaktwinkel θ des Ablöselacks den kritischen Kontaktwinkel $\theta_c$, so dass die rauen Bereiche, also die Mikrokanäle, benetzt und befüllt werden und gleichzeitig die weniger rauen Bereiche bzw. glatten Bereiche der Prägelackoberfläche nicht benetzt und nicht befüllt werden.

In dem erfindungsgemäßen Verbundgebilde ist es bevorzugt, dass das Verhältnis $(1-(\Phi_s))/(r-(\Phi_s))$ möglichst klein ist, damit der kritische Kontaktwinkel $\theta_c$ groß wird. Dieses Verhältnis ist vorzugsweise kleiner 0,8, stärker bevorzugt kleiner 0,5, noch stärker bevorzugt kleiner 0,3 und am stärksten bevorzugt kleiner 0,1.

Der Plateauflächenanteil $\Phi_s$ ist vorzugsweise klein, beispielsweise kleiner als 0,5, stärker bevorzugt kleiner als 0,3 und noch stärker bevorzugt kleiner als 0,1. In einer Ausführungsform ist der Plateauflächenanteil $\Phi_s$ in einem Bereich aus benachbart aneinander angeordneten Vertiefungen (4) und dem Bereich zwischen diesen Vertiefungen (4) kleiner als 0,2, vorzugsweise kleiner als 0,1 und noch stärker bevorzugt annähernd oder sogar genau Null, so dass in diesem Bereich das Verhältnis $(1-\Phi_s)/(r-\Phi_s)$ ausschließlich oder nahezu ausschließlich durch den Rauheitsfaktor r bestimmt wird.

In der vorliegenden Erfindung ist es bevorzugt, dass der Ablöselack die Mikrokanäle vollständig und ausschließlich diese benetzt und ausfüllt.

Durch die Ausnutzung des Wicking-Effekts wird die Prägelackschicht nur im Bereich der Mikrokanäle durch den Ablöselack benetzt, im Bereich der Nanostrukturen findet keine Benetzung durch Anlagerung des Ablöselacks statt.

Die Nanostrukturen können nach Bedarf so ausgestaltet sein, dass sie wie die glatte gehärtete Prägelackschicht von dem Ablöselack nicht benetzt und nicht befüllt werden, oder dass sie wie die Vertiefung von dem Ablöselack benetzt und befüllt werden. Dies kann durch Einstellen der Formen und Tiefen der Strukturen sowie der Winkel in den Strukturen erfolgen.

Je größer der kritische Winkel $\theta_c$, also je größer nach obiger Formel der Rauheitsfaktor und je kleiner der Plateauflächenanteil der Mikrokanäle $\Phi_s$ ist, desto mehr Freiheit besteht bei der Auswahl des Prägelacks, beispielsweise hinsichtlich seiner Oberflächenenergie.

Die Erfüllung von Bedingung (I) und Bedingung (II) ermöglicht sogar eine vollständige spontane und ausschließliche Benetzung und Befüllung von Mikrokanälen mit nicht-rechteckigem Querschnitt durch einen Ablöselack, wobei die Plateauflächen sowie ggf. vorhandene Nanostrukturen vollkommen unbenetzt bleiben.

Der Ausdruck "ausschließlich" bedeutet, dass der Ablöselack nur die Vertiefung benetzt und ausfüllt und die anderen Bereiche der Prägelackhartschicht nicht benetzt und nicht ausfüllt. Der Ablöselack ist also nur in den Vertiefungen vorhanden. In einer Ausführungsform kann die Vertiefung vollständig ausgefüllt sein. Vollständig heißt, dass der Ablöselack die Vertiefung bis zur Höhe der Übergänge zu der Ebene der Prägelackhartschicht, also bis zur Kante, vollständig ausfüllt. Zwischen diesen Übergängen ist die Füllhöhe des Ablöselacks beliebig und kann z. B. durch Meniskusbildung niedriger oder durch Auswölbung nach oben höher sein.

Ausgehend von den vorstehend genannten bevorzugten Strukturverhältnissen und einer gegebenen gehärteten Prägelackschicht (2) kann der Fachmann anhand der Bedingungen (I) und (II) das Material der Ablöselackschicht und damit die Eigenschaften, wie z. B. Oberflächenenergie, so auswählen, dass die gewünschte Wirkung der selektiven Benetzung und Befüllung der Vertiefungen (4) erzielt wird.

Funktionsschicht (3)

Die Funktionsschicht ist eine funktionelle Schicht, beispielsweise eine metallische Reflexionsschicht oder eine halbleitende Schicht.

Geeignete metallische Reflexionsschichten sind beispielsweise Schichten aus Al, Sn, Cu, Zn, Pt, Pd, Au, Ag, Cr, Ti, Ni, Mo, Fe oder deren Legierungen, wie z.B. Cu-Al, Cu-Sn, Cu-Zn, Eisenlegierungen, Stahl, Edelstahl, Metallverbindungen, wie Oxide oder Sulfide von Metallen, wie beispielsweise Kupferoxid, Aluminiumoxid, Zinksulfid und dergleichen.

Geeignete weitere funktionelle Schichten sind halbleitende Schichten beispielsweise Schichten aus anorganischen Halbleitern wie amorphes Si, metalloxidische Halbleiter wie z.B. ZnO (Zink-Oxid), InGaZnO (Indium-Gallium-Zink-Oxid), oder andere tertiäre oder quaternäre Verbindungen oder auch aufdampfbare molekulare organische Halbleiter aus der Gruppe der Acene wie z.B. Pentacen oder aus der Gruppe der Thienoacene wie z.B. dinaphtho[2,3-b:2',3'-f]thieno[3,2-b]thiophen (DNTT) und benzothieno[3,2-b][1]benzothiophen (BTBT) oder aus der Gruppe der Fullerene wie z.B. C60 oder aus der Gruppe der Phthalocyanine wie z.B. Cu-Phthalocyanin oder aus der Gruppe der Thiophene wie PTCDI-C13 oder Blendmaterialien wie PCBM-P3HT.

Als funktionelle Schicht können auch dielektrische Schichten verwendet werden.

Geeignete dielektrische Schichten sind beispielsweise Schichten aus CVD-Polymeren wie Parylen oder Polyethylen, oder aus oxidische Dielektrika wie $Al_2O_3$, $ZrO_2$, $TiO_2$ oder $SiO_2$ oder aus löslichen Polymeren wie trimethylsilylcellulose (TMSC) oder Polynorbornen-diphenylester (PNDPE) oder Polyurethan-Acrylate (PUA). Geeignete sensorische Schichten sind z.B. ferroelektrische Polymere aus der Gruppe der Polyvinyliden-Fluoride wie z.B. PVDF-TrFE oder PVDF-TrFE-CFE.

Eine geeignete funktionelle Schicht kann auch Carbon Nanotubes (SWCNT) mit entweder metallischen oder halbleitenden Eigenschaften umfassen.

Die Schicht (3) kann eines dieser Materialien enthalten oder daraus bestehen. Die Schicht (3) kann auch mehrere Materialien enthalten oder daraus bestehen. Es können auch mehrere Schichten (3) vorhanden sein.

Die funktionellen Schichten können auch in beliebiger Reihenfolge in PVD-oder CVD-Verfahren hintereinander aufgebracht werden und danach gemeinsam in einem Ablöseschritt über den Mikrokanalbereichen entfernt werden. Diese Verfahren umfassen thermisches Verdampfen, Sputtern oder Elektronenstrahlbedampfung oder das Abscheiden aus der Flüssigphase.

Im darauffolgenden Verfahrensschritt wird die Ablöselackschicht durch Einwirkung eines organischen Lösemittels oder von Wasser gleichzeitig mit der darüberliegenden funktionellen Schicht entfernt.

Die funktionelle Schicht verbleibt dabei nur im Bereich der glatten Oberflächen auf der Prägelackschicht, da die Ablöselackschicht ausschließlich in den Bereichen der Mikrokanäle abgeschieden wurde.

Dadurch ergibt sich eine exakte Übereinstimmung der glatten Bereiche der Lackschicht mit der funktionellen Schicht ohne Toleranzen.

Weitere Schicht (6)

Anschließend kann die so erhaltene Struktur ggf. mit einer oder mehreren Schutzlackschichten oder weiteren funktionellen Schichten versehen werden. Gegebenenfalls kann der Brechungsindex der an die Prägelackschicht angrenzenden Schicht an den Brechungsindex der Prägelackschicht angepasst sein, um optische Wechselwirkungen mit den Mikrokanälen zu verhindern.

Struktur des Verbundgebildes

In dem erfindungsgemäßen Verbundgebilde sind das Trägersubstrat, die Prägelackhartschicht und die Funktionsschicht unmittelbar übereinander angeordnet.

Der Ausdruck "unmittelbar übereinander angeordnet" bedeutet, dass die Schichten flächig übereinander angeordnet sind und zwischen dem Trägersubstrat und der Prägelackschicht sowie zwischen der Prägelackschicht und der Funktionsschicht keine weiteren Schichten oder sonstige Materialien, wie Klebstoffe, vorhanden sind.

Generell bedeutet in der vorliegenden Erfindung der Ausdruck, dass Strukturen oder Elemente "unmittelbar" übereinander oder nebeneinander angeordnet sind, dass keine weiteren Strukturen oder Elemente zwischen den genannten zwei Strukturen oder Elementen vorhanden sind.

In einem Querschnitt des erfindungsgemäßen Verbundgebildes ist in der Richtung senkrecht zu den Schichten, also in z-Richtung, entweder der Verbund Schicht (1)/Schicht (2)/Schicht (3) oder der Verbund Schicht (1), Schicht (2)/Vertiefung (4) angeordnet.

Das erfindungsgemäße Verbundgebilde weist einen Querschnitt auf, bei dem eine Kombination der folgenden Elemente enthalten ist, die in dieser Reihenfolge und vorzugsweise unmittelbar übereinander angeordnet sind:

(a) Schicht (1)/Schicht (2)/ Schicht (3)

(b) Schicht (1)/Schicht (2)/Vertiefung (4)

In vertikaler Richtung, also senkrecht zur Fläche des Verbundgebildes, ist entweder Verbund (a) oder Verbund (b) vorhanden. Das gleichzeitige Vorhandensein von Schicht (3) und Vertiefung (4) in vertikaler Richtung ist ausgeschlossen.

In horizontaler Richtung weist das Verbundgebilde mindestens einen Bereich auf, worin Verbund (a) und Verbund (b) unmittelbar nebeneinander vorliegen, also aneinander angrenzen. Bevorzugt ist mindestens ein Bereich vorhanden, in dem links und rechts von Verbund (b) jeweils ein Verbund (a) unmittelbar angrenzt.

In einer Ausführungsform sind in dem erfindungsgemäßen Verbundgebilde die Trägerschicht (1), die gehärtete Prägelackschicht (2) und die Funktionsschicht (3) unmittelbar aufeinander angeordnet, das heißt, es befindet sich kein anderes Material, z. B. Klebstoff, zwischen den Schichten.

In Beispielen für erfindungsgemäße Ausführungsformen gilt:

(i) Die Vertiefung (4) ist 1 bis 100 $\mu$m tief, der Mittenrauwert Ra(2) ist weniger als 100 nm und TMV > 20, vorzugsweise TMV > 50.

(ii) Die Vertiefung (4) ist 1 bis 50 $\mu$m tief, der Mittenrauwert Ra(2) ist weniger als 50 nm und TMV > 100, vorzugsweise TMV > 200.

(iii) Die Vertiefung (4) ist 1 bis 50 $\mu$m tief, der Mittenrauwert Ra(2) ist weniger als 30 nm und TMV > 300, vorzugsweise TMV > 500.

In den Ausführungsformen (i) bis (iii) sind die Vertiefungen vorzugsweise V-förmige Kanäle mit einem Tiefen-zu-Breiten-Verhältnis von mindestens 1,0, vorzugsweise mindestens 2,0. Besonders bevorzugt wird in (i) bis (iii) der in Ra(2) eingehende Wert der Unebenheit über die gesamte Fläche der Schicht (2) außerhalb der Vertiefungen und ggf.

vorhandener Nanostrukturen ermittelt.

Für das erfindungsgemäße Verfahren ist es bevorzugt, dass neben den genannten Strukturmerkmalen, insbesondere in den Ausführungsformen (i) bis (iii), auch die funktionellen Merkmale der Formel (I) bzw. Formel (II) erfüllt sind.

Die erfindungsgemäßen Verbundgebilde finden Verwendung als optische Elemente wie Mikrolinsen oder dielektrische Spiegel oder Lichtauskoppel-, Lichteinkoppel- oder Lichtlenkstrukturen, als Lichtfilter, als (opto)elektronische Bauteile wie Transistoren, Kapazitäten, Speicherelemente oder photovoltaische Zellen, als Sensoren wie mechanoakustische (Lautsprecher) bzw. akustomechanische (Mikrofon) Wandler, als Dekorelemente.

Herstellung des Verbundgebildes

Im Folgenden wird die Herstellung eines erfindungsgemäßen Verbundgebildes beschrieben.

Das erfindungsgemäße Verfahren zur selektiven Beschichtung von Oberflächenbereichen eines Verbundgebildes ist durch die folgenden Schritte in der angegebenen Reihenfolge gekennzeichnet:

a) das Bereitstellen einer Trägerschicht (1),
b) das Aufbringen einer Lackschicht auf die Trägerschicht (1),
c) das Prägen einer Vertiefung (4) in die Lackschicht unter Bildung einer Prägelackschicht,
d) das Härten der Prägelackschicht unter Bildung einer gehärteten Prägelackschicht (2),
e) das Aufbringen einer ausschließlich die Vertiefung der geprägten Vertiefung der gehärteten Prägelackschicht benetzenden und füllenden Ablöselackschicht (5),
f) das Aufbringen einer Funktionsschicht (3) und
g) das Einwirkenlassen eines Ablösemittels, wobei die Ablöselackschicht (5) und die darauf aufgebrachte Funktionsschicht (3) vollständig entfernt werden und die gehärtete Prägelackschicht (2) und die darauf aufgebrachte Funktionsschicht (3) nicht entfernt werden.

Schritt (a)

Das Material der Trägerschicht wird oben beschrieben. Die Trägerschicht ist in einem Beispiel eine Folie.

Schritt (b)

Die flüssige Lackschicht der oben beschriebenen Zusammensetzung kann mit bekannten Verfahren aufgetragen werden. Die Eigenschaften der Lackschicht werden so ausgewählt, dass sie nach dem Auftragen geprägt werden kann und die geprägte Struktur bis zum Härten erhalten bleibt. Um dies zu erreichen, kann die Lackschicht vor dem Prägen in einem gewünschten Ausmaß verfestigt werden, z. B. durch Trocknen oder Teilpolymerisieren.

Schritt (c)

In die Lackschicht werden Vertiefungen (4) durch Prägen eingebracht, so dass eine Prägelackschicht entsteht.

In einer Ausführungsform werden in einem Arbeitsgang in einem ersten Teilbereich Vertiefungen, z. B. Mikrokanäle, und in einem zweiten Bereich Nanostrukturen eingebracht.

Besonders geeignet zur Einbringung der Nanostrukturen und Mikrokanäle sind Prägeverfahren, bei denen das Prägewerkzeug vorzugsweise derart gestaltet ist, dass ggf. sowohl die Nanostrukturen als auch die Mikrokanäle in einem Arbeitsgang in die strahlungshärtbare Lackschicht eingebracht werden.

Die Prägung erfolgt beispielsweise mit Nickelstempeln, welche die gewünschte Prägestruktur als Negativ und beispielsweise einen Mittenrauwert Ra von weniger als 20 nm oder weniger als 10 nm aufweisen.

Schritt (d)

Die Prägelackschicht wird ausgehärtet, vorzugsweise unter UV-Bestrahlung oder mittels Elektronenstrahl, so dass schließlich die gehärtete Prägelackschicht (2) entsteht.

Schritt (e)

Das Aufbringen des flüssigen Ablöselacks zur Ausbildung der Ablöselackschicht kann durch bekannte Verfahren erfolgen.

Der Ablöselack ist ein Polymervorprodukt und kann nach dem Auftragen polymerisiert werden, so dass eine stabile Ablöselackschicht entsteht, auf die eine Schicht (3) aufgebracht werden kann.

Das selektive Benetzen und Füllen der Vertiefung (4) mit Ablöselack zur Ausbildung der Ablöselackschicht (5) wird dadurch erreicht, dass neben den insbesondere in den Ausführungsformen (i) bis (iii) genannten Strukturmerkmalen auch die funktionellen Merkmale der Formel (I) bzw. Formel (II) erfüllt sind.

Der Fachmann kann anhand der ausgewählten Materialien für Schicht (2) und Schicht (5) die Struktur der Vertiefung (4) ermitteln, die ein selektives Benetzen und Befüllen erlaubt.

Umgekehrt kann der Fachmann ausgehend von einer gegebenen Vertiefung (4) in einer Schicht (2) das Material für Schicht (5) ermitteln, das ein selektives Benetzen und Befüllen erlaubt.

Da die Oberflächenenergie temperaturabhängig ist, kann durch Einstellen der Temperatur ein selektives Benetzen und Befüllen unterstützt werden. Außerdem sind andere Maßnahmen zur Beeinflussung der Oberflächenenergie denkbar, z. B. Plasmabehandlung.

Schritt (f)

Auf die Ablöselackschicht (5) wird mindestens eine Funktionsschicht (3), beispielsweise eine metallische Reflexionsschicht aufgebracht. Vorzugsweise wird die funktionelle Schicht durch PVD-oder CVD-Verfahren (auch initiated-CVD oder oxygenated-CVD), etwa durch thermisches Verdampfen, durch Sputtern oder Elektronenstrahlbedampfung abgeschieden. Es ist aber auch eine Abscheidung aus der Flüssigphase möglich, sofern sich das Lösungsmittel/die Flüssigkeit orthogonal zum Ablöselack verhält, d.h. das Lösungsmittel/die Flüssigkeit den Ablöselack nicht anlöst, und gleichmäßig dünne Filme erzeugt werden können.

Die mehreren Schichten (3) können auch in beliebiger Reihenfolge in PVD-oder CVD-Verfahren hintereinander aufgebracht werden und danach gemeinsam in einem Ablöseschritt über den Mikrokanalbereichen entfernt werden. Diese Verfahren umfassen thermisches Verdampfen, Sputtern oder Elektronenstrahlbedampfung oder das Abscheiden aus der Flüssigphase.

Das durch das erfindungsgemäße Verfahren erhaltene Verbundgebilde kann ggf. mit einer oder mehreren Schutzlackschichten oder weiteren funktionellen Schichten versehen werden. Gegebenenfalls kann der Brechungsindex der an die Prägelackschicht angrenzenden Schicht an den Brechungsindex der Prägelackschicht angepasst sein, um optische Wechselwirkungen mit den Mikrokanälen zu verhindern.

Schritt (g)

Die Ablöselackschicht (5) wird zusammen mit der darüber befindlichen Funktionsschicht (3) durch Einwirkung eines Ablösemittels entfernt. Dieses Ablösemittel kann ein Lösungsmittel oder Wasser sein, wobei die Ablösung gegebenenfalls durch mechanische Einwirkung oder Ultraschall unterstützt werden kann.

Das Ablösemittel wirkt auf die Ablöselackschicht (5) ein und entfernt sie dadurch aus der Vertiefung (4). Dieses Einwirken ist zum Beispiel ein Auflösen oder Suspendieren.

Das Entfernen der Funktionsschicht über der Ablöselackschicht (5) erfolgt dadurch, dass (i) durch Einwirken des Ablösemittels auf die Ablöselackschicht diese entfernt wird und durch den Wegfall der Ablöselackschicht als Träger auch die nicht-selbsttragende Funktionsschicht entfernt wird, und/oder (ii) durch Einwirken des Ablösemittels auf die Bindung zwischen der Ablöselackschicht und der Funktionsschicht diese abgelöst wird.

Das Ablösemittel ist nicht in der Lage, auf die Funktionsschicht (3) einzuwirken und sie dadurch zu entfernen. Das Ablösemittel hat vorzugsweise keine Auswirkung auf die Haftung der Schicht (1) auf der Schicht (2) und auf die Haftung der Schicht (3) auf der Schicht (2). Diese Bindungen sind also vorzugsweise inert gegen das Ablösemittel, beispielsweise durch Ausbildung kovalenter Bindungen beim Härten des Prägelacks. Im einfachsten Fall kann eine Kombination aus wasserunlöslicher Schicht (2) und wasserlöslicher Schicht (5) eingesetzt werden.

Das Material, die Dicke und die sonstige Beschaffenheit der Funktionsschicht werden unter diesem Gesichtspunkt in Abhängigkeit von anderen Parametern, wie der Breite der Vertiefung oder der Bindungsfestigkeit zwischen Funktionsschicht und Prägelackhartschicht bzw. Ablöselackschicht, ausgewählt.

Schicht (5) und die darüberliegende Schicht (3) werden gleichzeitig entfernt, so dass Schicht (3) nur über Schicht (2) außerhalb der Vertiefung (4) verbleibt. Dadurch ergibt sich eine exakte und toleranzfreie Übereinstimmung der glatten Bereiche der Schicht (2) mit Schicht (3).

**Beispiele**

Die vorliegende Erfindung wird anhand der nachfolgenden Beispiele weiter veranschaulicht.

In den Beispielen wurden erfindungsgemäße Verbundgebilde unter Einsatz der genannten Materialien hergestellt. Die gehärteten Prägelackschichten wurden mit dem Ablöselack selektiv benetzt und befüllt.

Beispiel 1:

Prägelack: 80 Massenprozent PEGDA (MW = 600 g/mol entsprechend etwa n = 10), 17 Massenprozent TMPTA, 3 Massenprozent KL200

Ablöselack oder "Waschfarbe":
Wasserlöslich: 97 Massenprozent ACMO, 3 Massenprozent KL200

Beispiel 2:

50 Massenprozent ACMO, 47 Massenprozent PETTA, 3 Massenprozent KL200

Ablöselack oder "Waschfarbe":
Wasserlöslich: 97 Massenprozent ACMO, 3 Massenprozent KL200,

Beispiel 3:

Prägelack: 50 Massenprozent trifunktionelles UA-Oligomer, z.B. Ebecryl 4820®, 47 Massenprozent Hexandioldiacrylat (HDDA), 3 Massenprozent KL200

Ablöselack: 97 Massenprozent IBOA, 3 Massenprozent KL200

**Bezugszeichenliste**

(1) Trägerschicht
(2) Gehärtete Prägelackschicht
(3) Funktionsschicht
(4) Geprägte und von Funktionsschicht (3) freie Vertiefung
(5) Ablöselackschicht
(6) Weitere Schicht

**Patentansprüche**

1. Verbundgebilde, das eine Trägerschicht (1), eine gehärtete Prägelackschicht (2) und eine Funktionsschicht (3) in dieser Reihenfolge umfasst, wobei die gehärtete Prägelackschicht (2) einen Bereich aufweist, der eine geprägte und von der Funktionsschicht (3) freie Vertiefung (4) einer Tiefe von 1 bis 200 $\mu$m umfasst und der außerhalb der Vertiefung vollständig mit der Funktionsschicht (3) bedeckt ist, wobei das Verhältnis der Tiefe der Vertiefung (4) zu dem Mittenrauwert Ra des Bereichs außerhalb der Vertiefung (4) mindestens 20 beträgt.

2. Verbundgebilde nach Anspruch 1, wobei das Tiefen-zu-Breiten-Verhältnis der Vertiefung (4) mindestens 1,0 beträgt.

3. Verbundgebilde nach einem der vorstehenden Ansprüche, wobei das Verhältnis der Tiefe der Vertiefung (4) zu dem Mittenrauwert Ra mindestens 50 beträgt.

4. Verbundgebilde nach einem der vorstehenden Ansprüche, wobei der Mittenrauwert Ra der gehärteten Prägelackschicht (2) höchstens 20 nm beträgt.

5. Verbundgebilde nach einem der vorstehenden Ansprüche, wobei das Verhältnis $(1-\Phi_s)/(r-\Phi_s)$ kleiner 0,5 ist, worin $\Phi_s$ der Plateauflächenanteil der gehärteten Prägelackschicht (2) und r der als Quotient aus tatsächlicher Oberfläche und ihrer horizontalen Projektion definierte Rauheitsfaktor der gehärteten Prägelackschicht (2) ist.

6. Verbundgebilde nach einem der vorstehenden Ansprüche, wobei das Tiefen-zu-Breiten-Verhältnis der Vertiefung (4) mindestens 2,0 beträgt, das Verhältnis der Tiefe der Vertiefung (4) zu dem Mittenrauwert Ra der gehärteten Prägelackschicht (2) mindestens 50 beträgt und das Verhältnis $(1-\Phi_s)/(r-\Phi_s)$ kleiner 0,3 ist.

7. Verbundgebilde nach einem der vorstehenden Ansprüche, wobei die Vertiefung (4) einen V-förmigen Querschnitt aufweist.

8. Verbundgebilde nach einem der vorstehenden Ansprüche, wobei mindestens zwei Vertiefungen (4) als Mikrokanäle mit V-förmigem Querschnitt in einem Abstand von weniger als der Breite eines dieser Kanäle parallel zueinander angeordnet sind.

9. Verbundgebilde nach einem der vorstehenden Ansprüche, wobei die gehärtete Prägelackschicht (2) herstellbar ist aus Lackzusammensetzungen auf Basis von Polethylenglykoldiacrylaten mit 1 bis 10 Massenprozent an höherfunktionellen Acrylaten, auf Basis von Acryloylmorpholin mit 10 bis 50 Massenprozent an höherfunktionellen Acrylaten oder auf Basis von hochvernetzenden multifunktionellen Polyether-,Polyester- oder Polyurethan-Acrylatsystemen.

10. Verbundgebilde nach einem der vorstehenden Ansprüche, wobei die Funktionsschicht (3) herstellbar ist aus Metallen, wie Al, Sn, Cu, Zn, Pt, Pd, Au, Ag, Cr, Ti, Ni, Mo, Fe oder deren Legierungen, wie z.B. Cu-Al, Cu-Sn, Cu-Zn, Eisenlegierungen, Stahl, Edelstahl, Metallverbindungen, einem anorganischen Halbleiter, metalloxidischen Halbleiter oder aufdampfbaren molekularen organischen Halbleiter aus der aus Acenen, Thienoacenen oder Fullerenen bestehenden Gruppe, Phthalocyaninen, Thiophenen oder Blendmaterialien, Kohlenstoffnanoröhrchen, einer dielektrischen Schicht, oxidischen Dielektrika oder löslichen Polymeren, oder die Funktionsschicht (3) eine sensorischen Schicht umfasst.

11. Verfahren zur selektiven Beschichtung von Oberflächenbereichen eines Verbundgebildes nach einem der vorstehenden Ansprüche, das eine Trägerschicht (1), eine gehärtete Prägelackschicht (2) und eine Funktionsschicht (3) in dieser Reihenfolge aufweist, **gekennzeichnet durch** folgende Schritte in der angegebenen Reihenfolge:

   a) das Bereitstellen einer Trägerschicht (1),
   b) das Aufbringen einer Lackschicht auf die Trägerschicht (1),
   c) das Prägen einer Vertiefung (4) in die Lackschicht unter Bildung einer Prägelackschicht,
   d) das Härten der Prägelackschicht unter Bildung einer gehärteten Prägelackschicht (2),
   e) das Aufbringen einer ausschließlich die Vertiefung der geprägten Vertiefung der gehärteten Prägelackschicht (2) benetzenden und füllenden Ablöselackschicht (5),
   f) das Aufbringen einer Funktionsschicht (3) und
   g) das Einwirkenlassen eines Ablösemittels, wobei die Ablöselackschicht (5) und die darauf aufgebrachte Funktionsschicht (3) vollständig entfernt werden und die gehärtete Prägelackschicht (2) und die darauf aufgebrachte Funktionsschicht (3) nicht entfernt werden.

12. Verfahren nach Anspruch 11, wobei Ungleichung (I) erfüllt ist:

$$\theta < \varphi = 90° - \alpha/2 \qquad\qquad (I)$$

worin $\theta$ der Kontaktwinkel ist, den der Ablöselack auf einer Plateaufläche der gehärteten Prägelackschicht (2) einnimmt, $\alpha$ der Öffnungswinkel einer Vertiefung (4) ist und $\varphi$ der Kantenwinkel der Seitenwände mit der Horizontalen ist.

13. Verfahren nach Anspruch 11 oder 12, wobei $\theta < \theta_c$ erfüllt ist, wobei

$$cos\theta_c = \frac{1-\phi_s}{r-\phi_s}$$

worin $\theta$ der Kontaktwinkel ist, den der Ablöselack auf einer Plateaufläche der gehärteten Prägelackschicht (2) einnimmt, $\theta_c$ der kritische Kontaktwinkel des Ablöselacks auf einer die Vertiefung (4) aufweisenden Fläche der gehärteten Prägelackschicht (2) ist, r der Rauheitsfaktor der gehärteten Prägelackschicht (2) und $\Phi_s$ der Plateau-flächenanteil der gehärteten Prägelackschicht (2) ist.

14. Verfahren nach einem der Ansprüche 11 bis 13, wobei der Ablöselack herstellbar ist aus Zusammensetzungen auf Basis von 4-Acryloylmorpholin oder Isobornylacrylat.

15. Verwendung des Verbundgebildes nach einem der Ansprüche 1 bis 10 als optisches Element, Lichtfilter, (opto)elektronisches Bauteil, Sensor oder Dekorelement.

**Claims**

1. A composite structure comprising a support layer (1), a cured embossing lacquer layer (2) and a functional layer (3) in this order, wherein the cured embossing lacquer layer (2) has a region comprising an embossed recess (4) which is free from the functional layer (3) and has a depth of 1 to 200 $\mu$m and which is completely covered with the functional layer (3) outside the recess, wherein the ratio of the depth of the recess (4) to the average roughness Ra of the region outside the recess (4) is at least 20.

2. The composite structure according to claim 1, wherein the depth-to-width ratio of the recess (4) is at least 1.0.

3. The composite structure according to one of the above claims, wherein the ratio of the depth of the recess (4) to the average roughness Ra is at least 50.

4. The composite structures according to any of the above claims, where the average roughness Ra of the cured embossing lacquer layer (2) is at most 20 nm.

5. The composite structures according to any of the foregoing claims, the ratio $(1-\Phi_s)/(r-\Phi_s)$ being less than 0.5, wherein $\Phi_s$ is the plateau area fraction of the cured embossing lacquer layer (2) and r is the roughness factor of the cured embossing lacquer layer (2) defined as the quotient of the actual surface area and its horizontal projection.

6. The composite structure according to any of the above claims, wherein the depth-to-width ratio of the recess (4) is at least 2.0, the ratio of the depth of the recess (4) to the average roughness Ra of the cured embossing lacquer layer (2) is at least 50, and the ratio $(1-\Phi_s)/(r-\Phi_s)$ is less than 0.3.

7. The composite structure according to any of the foregoing claims, wherein the recess (4) has a V-shaped cross-section.

8. The composite structures according to any of the foregoing claims, wherein at least two recesses (4) as micro-channels with a V-shaped cross-section are arranged parallel to one another at a distance of less than the width of one of these channels.

9. The composite structure according to one of the above claims, wherein the cured embossing lacquer layer (2) is obtainable from lacquer compositions based on polyethylene glycol diacrylates with 1 to 10 mass percent of higher functional acrylates, based on acryloyl morpholine with 10 to 50 mass percent of higher functional acrylates or based on highly crosslinking multifunctional polyether, polyester or polyurethane acrylate systems.

10. The composite structures according to one of the above claims, wherein the functional layer (3) is obtainable from metals such as Al, Sn, Cu, Zn, Pt, Pd, Au, Ag, Cr, Ti, Ni, Mo, Fe or their alloys, such as for example Cu-Al, Cu-Sn, Cu-Zn, iron alloys, steel, stainless steel, metal compounds, an inorganic semiconductor, metal oxide semiconductor or vaporisable molecular organic semiconductor from the group consisting of acenes, thienoacenes or fullerenes, phthalocyanines, thiophenes or blending materials, carbon nanotubes, a dielectric layer, oxidic dielectrics or soluble polymers, or the functional layer (3) comprises a sensory layer.

11. A method for selectively coating surface areas of a composite structure according to any one of the preceding claims comprising a carrier layer (1), a cured embossing lacquer layer (2) and a functional layer (3) in this order, **characterized by** the following steps in the order given:

    (a) providing a carrier layer (1),

b) applying a lacquer coating to the carrier layer (1),

(c) embossing a recess (4) into the lacquer layer to form an embossing lacquer layer,

(d) curing of the embossing lacquer layer to form a cured embossing lacquer layer (2),

(e) applying a release lacquer layer (5) which exclusively wets and fills the recess of the embossed recess of the hardened embossing lacquer layer (2),

(f) applying a functional layer (3) and

(g) allowing a release agent to act, wherein the release lacquer layer (5) and the functional layer (3) applied thereto are completely removed and the hardened embossing lacquer layer (2) and the functional layer (3) applied thereto are not removed.

12. The method according to claim 11, where inequality (I) is satisfied:

$$\theta < \varphi = 90° - \alpha/2 \qquad\qquad (I)$$

wherein $\theta$ is the contact angle which the release lacquer assumes on a plateau surface of the cured embossing lacquer layer (2), $\alpha$ is the opening angle of a recess (4) and $\varphi$ is the edge angle of the side walls with the horizontal.

13. The method according to claim 11 or 12, where $\theta < \theta_c$ is fulfilled, where

$$cos\theta_c = \frac{1-\phi_s}{r-\phi_s}$$

wherein $\theta$ is the contact angle which the release lacquer on a plateau surface of the cured embossing lacquer layer (2) assumes, $\theta_c$ is the critical contact angle of the release lacquer on a surface of the cured embossing lacquer layer (2) having the recess (4), r is the roughness factor of the cured embossing lacquer layer (2) and $\Phi_s$ is the plateau surface portion of the cured embossing lacquer layer (2).

14. The method according to any one of claims 11 to 13, wherein the release lacquer is obtainable from compositions based on 4-acryloylmorpholine or isobornyl acrylate.

15. The use of the composite structure according to any one of claims 1 to 10 as an optical element, light filter, (op-to)electronic component, sensor or decorative element.

**Revendications**

1. Structure composite, qui comprend dans cet ordre une couche de support (1), une couche de vernis gaufrée durcie (2) et une couche fonctionnelle (3), dans laquelle la couche de vernis gaufrée durcie (2) présente une zone qui comprend un évidement gaufré (4), exempt de couche fonctionnelle (3) et avec une profondeur de 1 à 200 $\mu$m et qui, en dehors de l'évidement, est recouverte entièrement de la couche fonctionnelle (3), dans laquelle le rapport de la profondeur de l'évidement (4) sur la rugosité moyenne Ra de la zone en dehors de l'évidement (4) est au moins de 20.

2. Structure composite selon la revendication 1, dans laquelle le rapport de la profondeur sur la largeur de l'évidement (4) est au moins de 1,0.

3. Structure composite selon une des revendications précédentes, dans laquelle le rapport de la profondeur de l'évidement (4) sur la rugosité moyenne Ra est au moins de 50.

4. Structure composite selon une des revendications précédentes, dans laquelle la rugosité moyenne Ra de la couche de vernis gaufrée durcie (2) est au maximum de 20 nm.

5. Structure composite selon une des revendications précédentes, dans laquelle le rapport (1-$\Phi$S)/(r-$\Phi$S) est inférieur à 0,5, où $\Phi$s représente la part de surfaces de plateau de la couche de vernis gaufrée durcie (2) et r le coefficient de rugosité de la couche de vernis gaufrée durcie (2) qui est défini comme le quotient de la surface réelle et de sa projection horizontale.

**6.** Structure composite selon une des revendications précédentes, dans laquelle le rapport de la profondeur sur la largeur de l'évidement (4) est au moins de 2, 0, le rapport de la profondeur de l'évidement (4) sur la rugosité moyenne Ra de la couche de vernis gaufrée durcie (2) est au moins de 50 et le rapport $(1-\Phi s)/(r-\Phi s)$ est inférieur à 0,3.

**7.** Structure composite selon une des revendications précédentes, dans laquelle l'évidement (4) présente une section transversale en forme de V.

**8.** Structure composite selon une des revendications précédentes, dans laquelle au moins deux évidements (4) sont disposés sous la forme de micro-canaux avec une section transversale en forme de V parallèlement l'un à l'autre à une distance inférieure à la largeur d'un de ces canaux.

**9.** Structure composite selon une des revendications précédentes, dans laquelle la couche de vernis gaufrée durcie (2) peut être fabriquée à partir de compositions de vernis à base de diacrylate de polyéthylène glycol comprenant 1 à 10 % en masse d'acrylates à fonctionnalité élevée, à base d'acryloylmorpholine comprenant 10 à 50 % en masse d'acrylates à fonctionnalité élevée ou à base de systèmes d'acrylates de polyéther, de polyester ou de polyuréthanne multifonctionnels à fort pouvoir de réticulation.

**10.** Structure composite selon une des revendications précédentes, dans laquelle la couche fonctionnelle (3) peut être fabriquée à partir de métaux, tels que Al, Sn, Cu, Zn, Pt, Pd, Au, Ag, Cr, Ti, Ni, Mo, Fe ou leurs alliages, tels que par exemple Cu-Al, Cu-Sn, Cu-Zn, des alliages de fer, de l'acier, de l'acier inoxydable, des composés métalliques, un semi-conducteur anorganique, des semi-conducteurs à oxyde métallique ou des semi-conducteurs organiques moléculaires qui peuvent être déposés en phase vapeur parmi le groupe composé d'acènes, de thiénoacènes ou de fullerènes, des phtalocyanines, des thiophènes ou des matériaux mixtes, des nanotubes de carbone, une couche diélectrique, des milieux diélectriques d'oxyde ou des polymères solubles, ou la couche fonctionnelle (3) comprend une couche sensorielle.

**11.** Procédé destiné à recouvrir de manière sélective des zones de surface d'une structure composite selon une des revendications précédentes, qui comprend dans cet ordre une couche de support (1), une couche de vernis gaufrée durcie (2) et une couche fonctionnelle (3), **caractérisé par** les étapes suivantes dans l'ordre indiqué :

    a) la préparation d'une couche de support (1),
    b) l'application d'une couche de vernis sur la couche de support (1),
    c) le gaufrage d'un évidement (4) dans la couche de vernis avec la formation d'une couche de vernis gaufrée,
    d) le durcissement de la couche de vernis gaufrée avec la formation d'une couche de vernis gaufrée durcie (2),
    e) l'application d'une couche de vernis décollable (5) réticulant et remplissant exclusivement l'évidement de l'évidement gaufré de la couche de vernis gaufrée durcie (2),
    f) l'application d'une couche fonctionnelle (3) et
    g) la mise en action d'un moyen de décollement, la couche de vernis décollable (5) et la couche fonctionnelle (3) appliquée dessus étant entièrement distantes et la couche de vernis gaufrée durcie (2) et la couche fonctionnelle (3) appliquée dessus n'étant pas distantes.

**12.** Procédé selon la revendication 11, dans lequel l'inéquation (I) est satisfaite :

$$\theta < \varphi = 90°-\alpha/2 \qquad (\mathrm{I})$$

où $\theta$ représente l'angle de contact que prend le vernis de décollement sur une surface de plateau de la couche de vernis gaufrée durcie (2), $\alpha$ représente l'angle d'ouverture d'un évidement (4) et $\phi$ représente l'angle de bord des parois latérales par rapport à l'horizontale.

**13.** Procédé selon la revendication 11 ou 12, dans lequel $\theta < \theta C$ est satisfait, dans lequel

$$cos\theta_c = \frac{1-\phi_s}{r-\phi_s}$$

où $\theta$ représente l'angle de contact que prend le vernis de décollement sur une surface de plateau de la couche de vernis gaufrée durcie (2), 9c représente l'angle de contact critique du vernis de décollement sur une surface de la couche de vernis gaufrée durcie (2) représentant l'évidement (4), r représente le coefficient de rugosité de la couche de vernis gaufrée durcie (2) et Φs représente la part de surfaces de plateau de la couche de vernis gaufrée durcie (2).

14. Procédé selon une des revendications 11 à 13, dans lequel le vernis de décollement peut être fabriqué à partir de compositions à base de 4-acryloylmorpholine ou d'isobornylacrylate.

15. Utilisation de la structure composite selon une des revendications 1 à 10 en tant qu'élément optique, filtre de lumière, composant (opto)électronique, capteur ou élément décoratif.

# Fig. 1

# Fig. 2

Fig. 2a

Fig. 2b

Fig. 2c

Fig. 2d

Fig. 2e

Fig. 3

Fig. 3a

Fig. 3b

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4044177 A
- DE 102008050605 A1
- US 2008044627 A1
- US 2005056189 A1
- EP 0358949 A2


**In der Beschreibung aufgeführte Nicht-Patentliteratur**

- **P. CONCUS ; R. FINN.** On a class of capillary surfaces. *J. Analyse Math.,* 1970, vol. 23, 65-70
- **DINESH CHANDRA et al.** Dynamics of a droplet imbibing on a rough surface. *Langmuir,* 2011, vol. 27, 13401-13405